# EUROPEAN PATENT SPECIFICATION

(11) **EP 3 476 525 B1**
(45) Date of publication and mention of the grant of the patent: **19.07.2023**
(21) Application number: 17814465.5
(22) Date of filing: 31.03.2017
(51) Int. Cl.: B23P 5/00, B23K 31/00, B23K 101/20, C21D 9/18

(54) **METHOD FOR MANUFACTURING ULTRA-HARD AND WEAR-RESISTANT COMPOSITE BLADE**
VERFAHREN ZUR HERSTELLUNG EINER ULTRAHARTEN UND VERSCHLEISSFESTEN VERBUNDSCHAUFEL
PROCÉDÉ DE FABRICATION D'UNE LAME COMPOSITE ULTRA-DURE ET RÉSISTANTE À L'USURE

(30) Priority: 23.06.2016 CN 201610485843
(43) Date of publication of application: 01.05.2019
(73) Proprietor: BMAN Manufacturing (Zhe Jiang) Co., Ltd., Tong Xiang Zhejiang 314500 (CN)
(72) Inventor: CHIEN, Yu-chang, Tong Xiang Zhejiang 314500 (CN)
(74) Representative: Corradini, Corrado
(86) International application number: PCT/CN2017/078918
(87) International publication number: WO 2017/219726

(56) References cited:
- EP-A2- 0 123 770
- AT-U1- 11 730
- CN-A- 1 532 304
- CN-A- 101 318 333
- CN-A- 101 530 949
- CN-A- 101 899 713
- CN-A- 101 899 713
- CN-A- 102 825 276
- CN-A- 104 842 045
- CN-A- 104 842 045
- CN-A- 106 077 584
- US-A- 4 336 083
- US-A1- 2008 155 836

## Description

### TECHNICAL FIELD

The present invention relates to methods of preparing blades, and more particularly, to methods of preparing ultra-hard and wear-resistant composite blades.

### BACKGROUND

The blade of a knife is usually made from a single material, such as a steel knife, a ceramic knife, and the like. These knives have sharp edges and are easy to cut. However, all-steel blades are usually made from a single high-carbon tool steel, an alloy tool steel, or a corrosion-resistant alloy steel. In this way, the consumption of hardness materials is increased, and so are the costs. In addition, the toughness of the tool steel after quenching process decreases and it is brittle and easy to chip, which lowers the impact resistance and increases danger during use. Ceramic blades are made of precision ceramic under high temperature and high pressure. They have the advantages of high wear resistance, high hardness, rust-resisting, easy to clean, and the like. But all-ceramic blades are not only costly and expensive, but also have lower toughness and are more brittle.

In the prior art, nickel-based, cobalt-based, and iron-based alloys, tungsten carbide composite material, high rust-resistant hard alloys and ceramic, and synthetic diamond are materials with relatively high hardness in the world. Ultra-hard alloy materials that are made by pulverization and high-temperature sintering of these materials show excellent usability and wide applicability in the fields of daily cutting tools and crushing tools. However, the ultra-hard alloy composite blades are assembled by using an ultra-hard alloy substrate and a corrosion-resistant base, which leads to insufficient fastness; and the ultra-hard material layer has a thin structure, which is weak and not suitable for tools.

There are some documents have disclosed general manufacture of hard composite blades or related filed and technology, such as, US20080155836A1, AT11730U1, and CN104842045A, etc. For example, the patent document CN101168230A discloses a method for preparing an ultra-hard composite blade, which comprises: drilling a preformed hole on a cemented carbide or high-speed steel plate which is to be the base of a blade; adding the ultra-hard material and the binder powder into the preformed hole under the protection of a sintering mold tool; and converting the materials in the preformed hole into an ultra-hard polycrystalline material by high-temperature and high-pressure sintering. Hence, this method requires formation of a preformed hole first and addition of a binder powder to strengthen the bonding fastness of the composite material, rendering a complicated process. CN101899713A discloses a method for producing gradient nano-structured polycrystalline superhard materials, comprising providing a nano-material precursor, a growth seed crystal, and an alloy powder nanocatalyst, wherein the growth precursors can grow into a gradient nano-structured polycrystalline ultra-hard material. CN102825276A discloses an ultra-fine crystalline alumina ceramic tool with excellent cutting performance and preparation process thereof by using the combustion synthesis and mechanical pressure method (SHS/QP). In addition, CN1532304A discloses a cutting tool comprising a cutting edge and a processing method thereof, the cutting edge being covered with an alloy reinforced coating layer composed of a mixture of nano carbon fibers, nano ceramics, adhesives and micron-grade cemented carbide by a laser.

### SUMMARY

In view of deficiencies in the prior art, the present invention provides a method of preparing an ultra-hard and wear-resistant composite blade, according to the appended claims.

At least one object of the present invention is achieved by the following technical solutions. In one aspect, the present invention provides a method for preparing an ultra-hard and wear-resistant composite blade, and the preparation method comprises:
Step A1, subjecting a blade base material to preform processing and base premolding processing to form a preformed body
Step A2, adding an ultra-hard alloy material to the preformed body, which is then subjecting to an ultra-high temperature melting treatment to produce a nanoscale ultra-hard alloy body; and
Step A3, after cooling, processing and grinding, according to the blade specifications, the nanoscale ultra-hard alloy body to obtain an ultra-hard, wear-resistant and rust-resistant composite blade.

Wherein, the temperature of the ultra-high temperature melting treatment in Step A2 may be 2400 to 2700°C, and the process time may be 2 to 10 seconds; said blade base material is Austenitic stainless steel; said ultra-hard alloy material is tungsten carbide composite alloy; and said cooling time is 30 minutes and the temperature is cooled to below 100 °C.

In one embodiment, the preformed body has a shape of a planar abutment or a curved abutment.

In one embodiment, said cooling method is air cooling or oil cooling.

The present invention also provides use of the ultra-hard and wear-resistant composite blade prepared according to the aforementioned method in preparation of an ultra-hard and wear-resistant cutter, a single-side ultra-hard and wear-resistant cutter, or ultra-hard and wear-resistant scissors.

During preparation of the ultra-hard and wear-resistant composite blade of the present invention, it is unnecessary to add bonding agent to increase the bonding fastness of the composite material. Merely by instantaneously melting the object at a high temperature, the base material and the welding material are alloyed, so that the composite blade can be welded firmly and not easily be peeled off.

Compared with the prior art, the present invention has at least the following beneficial effects: 1. The composite blade prepared according to the present invention has ultra-high hardness, wear resistance and corrosion resistance.

### 2. The tip of the nanoscale ultra-hard alloy body can have durable sharpness, not easy to wear.

### BRIEF DESCRIPTION OF THE DRAWINGS

Other features, objects, and advantages of the present invention will become apparent from the detailed description of the non-limiting examples with reference to the following figures.
Fig. 1 shows a blade of an ultra-hard and wear-resistant cutter prepared according to Embodiment 1
Fig. 2 shows a blade of a single-sided ultra-hard and wear-resistant cutter prepared according to Embodiment 2 of the present invention.
Fig. 3 shows blades of the ultra-hard and wear-resistant scissors prepared according to Embodiment 3

### Listing of referential signs: 1 is blade tip; 2 is blade base.

### DETAILED DESCRIPTION OF THE EMBODIMENTS

The present invention will be described in detail below with reference to the specific embodiments. The following examples are intended to further understand the invention, but are not intended to limit the invention in any way. It should be noted that a number of variations and modifications may be made by those skilled in the art without departing from the inventive concept.

### EMBODIMENT 1 (out of the scope of the present invention)

This embodiment relates to a method for preparing an ultra-hard and wear-resistant composite blade of an ultra-hard and wear-resistant cutter, which comprises the following steps:
Step A1, subjecting the blade base material to preform processing and base premolding processing to form a preformed body; and
Step A2, adding an ultra-hard alloy material into the preformed body, which was then subjecting to an ultra-high temperature melting treatment to produce;
Step A3, after cooling, processing and grinding, according to the blade specifications, the nanoscale ultra-hard alloy body to obtain an ultra-hard, wear-resistant and rust-resistant composite blade.

The temperature of said ultra-high temperature melting treatment in the step A2 was 1400 to 1800°C; and the process time was 2 to 60 seconds.

The shape of said preformed body was a planar abutment.

Said blade base material was Martensitic stainless steel.

Said ultra-hard alloy material was nickel-based alloy.

Said cooling method was air cooling; the cooling time was 120 minutes, and the temperature was cooled to below 100°C.

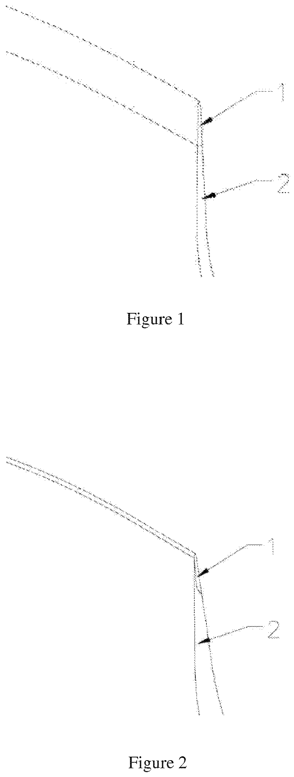

The wear-resistant cutter blade prepared in this embodiment is as shown in FIG. 1. Said wear-resistant cutter blade included a blade tip 1 and a blade base 2, and the blade tip 1 had a hardness of 58 to 75.

### EMBODIMENT 2

This embodiment relates to a method for preparing an ultra-hard and wear-resistant composite blade of a single-sided super wear-resistant cutter, which comprises the following steps:
Step A1, subjecting a blade base material to preform processing and base premolding processing to form a preformed body;
Step A2, adding an ultra-hard alloy material to the preformed body, which is then subjecting to an ultra-high temperature melting treatment to produce a nanoscale ultra-hard alloy body; and
Step A3, after cooling, processing and grinding, according to the blade specifications, the nanoscale ultra-hard alloy body to obtain an ultra-hard, wear-resistant and rust-resistant composite blade.

The temperature of said ultra-high temperature melting treatment in the step A2 was 2400 to 2700°C; and the process time is 2 to 10 seconds.

The shape of said preformed body was a curved abutment.

Said blade base material was Austenitic stainless steel.

Said ultra-hard alloy material was tungsten carbide cobalt alloy.

Said cooling method was oil cooling; the cooling time was 30 minutes; and the temperature was cooled to below 100°C.

The single-sided super wear-resistant cutter blade prepared in this embodiment is as shown in FIG. 2. Said single-sided super wear-resistant cutter blade included a blade tip 1 and a blade base 2; and the blade tip 1 had a hardness of 58 to 75.

### EMBODIMENT 3 (out of the scope of the present invention)

This embodiment relates to a method for preparing an ultra-hard and wear-resistant composite blade of super wear-resistant scissors, which comprises the following steps:
Step A1, subjecting a blade base material to preform processing and base premolding processing to form a preformed body; and
Step A2, adding an ultra-hard alloy material to the preformed body, which is then subjecting to an ultra-high temperature melting treatment to produce a nanoscale ultra-hard alloy body; Step A3, after cooling, processing and grinding, according to the blade specifications, the nanoscale ultra-hard alloy body to obtain an ultra-hard, wear-resistant and rust-resistant composite blade.

The temperature of said ultra-high temperature melting treatment in the step A2 was 1900 to 2100°C; and the process time was 30 to 40 seconds.

The shape of said preformed body was a curved abutment.

Said blade base material was titanium alloy.

Said ultra-hard alloy material was ceramic.

Said cooling method was oil cooling; the cooling time was 10 minutes; and the temperature was cooled to below 100°C.

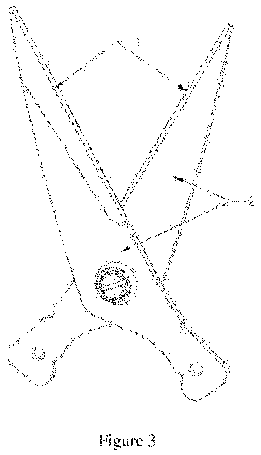

The blades of super wear-resistant scissors prepared in this embodiment is as shown in FIG. 3.

Said blades of the super wear-resistant scissors included blade tips 1 and blade bases 2; and the blade tips 1 had a hardness of 58 to 75.

## Claims

1. A method for preparing an ultra-hard and wear-resistant composite blade, **characterized in that** the method comprises:
Step A1: subjecting the blade base material to preform processing and base premolding processing to form a preformed body;
Step A2: adding an ultra-hard alloy material is added into the preformed body, which is then subjecting to an ultra-high temperature melting treatment to produce a nanoscale ultra-hard alloy body; and
Step A3: after cooling, processing and grinding, according to the blade specifications, the nanoscale ultra-hard alloy body to obtain an ultra-hard, wear-resistant and rust-resistant composite blade,
wherein:
the temperature of said ultra-high temperature melting treatment in the step A2 is 2400 to 2700°C; and the process time is 2 to 10 seconds;
said blade base material is Austenitic stainless steel;
said ultra-hard alloy material is tungsten carbide composite alloy;
the cooling time is 30 minutes;
and the temperature is cooled to below 100°C.

2. The method according to Claim 1, **characterized in that** the preformed body has a shape of a planar abutment or a curved abutment.

3. The method according to Claim 1, **characterized in that** said cooling method is air cooling or oil cooling.

4. Use of the ultra-hard and wear-resistant composite blade prepared according to the method of any one of Claims 1 to 3 in preparation of an ultra-hard and wear-resistant cutter, a single-side ultra-hard and wear-resistant cutter or ultra-hard wear-resistant scissors.

## Patentansprüche

1. Verfahren zur Herstellung einer ultraharten und abnutzungsfesten Verbundklinge, **dadurch gekennzeichnet, dass** das Verfahren Folgendes umfasst:
Schritt A1: Unterziehen des Klingengrundmaterials einer Vorformbearbeitung und Grundvorformlingsbearbeitung, um einen vorgeformten Körper zu bilden,
Schritt A2: Hinzufügen eines ultraharten Legierungsmaterials in den vorgeformten Körper, der dann einer Ultrahochtemperatur-Schmelzbehandlung unterzogen wird, um einen Körper aus nanoskaliger ultraharter Legierung zu produzieren, und
Schritt A3: nach einem Kühlen Bearbeiten und Schleifen des Körpers aus nanoskaliger ultraharter Legierung gemäß der Klingenspezifikationen, um eine ultraharte abnutzungsfeste Verbundklinge zu erhalten,
wobei:
die Temperatur der Ultrahochtemperatur-Schmelzbehandlung in dem Schritt A2 2400 bis 2700 °C beträgt und die Bearbeitungszeit 2 bis 10 Sekunden beträgt,
das Klingengrundmaterial austenitischer Edelstahl ist,
das ultraharte Legierungsmaterials Wolframkarbidverbundlegierung ist,
die Kühlungszeit 30 Minuten beträgt
und die Temperatur auf unter 100 °C gekühlt wird.

2. Verfahren nach Anspruch 1, **dadurch gekennzeichnet, dass** der vorgeformte Körper eine Form einer ebenen Anschlagfläche oder einer gekrümmten Anschlagfläche aufweist.

3. Verfahren nach Anspruch 1, **dadurch gekennzeichnet, dass** das Kühlverfahren Luftkühlung oder Ölkühlung ist.

4. Verwendung der ultraharten und abnutzungsfesten Verbundklinge, die gemäß dem Verfahren nach einem der Ansprüche 1 bis 3 hergestellt wurde, zur Herstellung einer ultraharten und abnutzungsfesten Schneideinrichtung, einer einseitigen ultraharten und abnutzungsfesten Schneideinrichtung oder einer ultraharten und abnutzungsfesten Schere.

## Revendications

1. Procédé de préparation d'une lame composite ultra-dure et résistante à l'usure, **caractérisé en ce que** le procédé comprend :
Étape A1: la soumission du matériau de base de la lame à un traitement de préformage et à un traitement de prémoulage de la base pour former un corps préformé ;
Étape A2 : l'ajout d'un matériau d'alliage ultra-dur dans le corps préformé, qui est ensuite soumis à un traitement de fusion à ultra-haute température pour produire un corps en alliage ultra-dur à l'échelle nanométrique; et
Étape A3 : après refroidissement, le traitement et le meulage, selon les caractéristiques de la lame, du corps en alliage ultra-dur à l'échelle nanométrique afin d'obtenir une lame composite ultra-dure, résistante à l'usure et à la rouille,
dans lequel,
la température dudit traitement de fusion à ultra-haute température à l'étape A2 est de 2400 à 2700°C ; et le temps de traitement est de 2 à 10 secondes ;
ledit matériau de base de la lame est de l'acier inoxydable austénitique ;
ledit matériau d'alliage ultra-dur est un alliage composite de carbure de tungstène ;
le temps de refroidissement est de 30 minutes ;
et la température est refroidie à moins de 100°C.

2. Procédé selon la revendication 1, **caractérisé en ce que** le corps préformé a la forme d'une butée plane ou d'une butée courbe.

3. Procédé selon la revendication 1, **caractérisé en ce que** ledit procédé de refroidissement est un refroidissement à air ou un refroidissement à huile.

4. Utilisation de la lame composite ultra-dure et résistante à l'usure préparée suivant le procédé selon l'une quelconque des revendications 1 à 3, pour la préparation d'un couteau ultra-dur et résistant à l'usure, d'un couteau à un seul tranchant ultra-dur et résistant à l'usure ou de ciseaux ultra-durs et résistants à l'usure.
